# EUROPÄISCHE PATENTSCHRIFT

(11) **EP 0 518 171 B1**
(45) Veröffentlichungstag und Bekanntmachung des Hinweises auf die Patenterteilung: **24.05.1995**
(21) Anmeldenummer: 92109236.7
(22) Anmeldetag: 02.06.1992
(51) Int. Cl.: A01D 34/74, A01D 34/82

(54) **Höheneinstellbares Tiefeneinstellmittel mit einem Gleitschuh**
Vertically adjustable depth adjusting means, with a sliding shoe
Moyen d'ajustage de la profondeur, réglable verticalement, avec un patin

(30) Priorität: 14.06.1991 US 715947
(43) Veröffentlichungstag der Anmeldung: 16.12.1992
(73) Patentinhaber: DEERE & COMPANY, Moline, Illinois 61265 (US)
(72) Erfinder: Sebben, Daniel Angelo, West Bend, Wisconsin 53032 (US); Teal, Richard Donald, Horicon, Wisconsin 53032 (US)
(74) Vertreter: Feldmann, Bernhard

(56) Entgegenhaltungen:
- GB-A- 1 515 854
- US-A- 2 732 675
- US-A- 3 043 604
- US-A- 3 423 912
- US-A- 3 450 211
- US-A- 3 925 970
- US-A- 4 441 266
- US-A- 4 878 339

## Beschreibung

Die Erfindung bezieht sich auf eine Kombination aus einem über dem Boden geführten Gehäuse und einem höheneinstellbaren Tiefeneinstellmittel, das einen vertikal gerichteten Schenkel aufweist, der in verschiedenen Vertikalstellungen mit einer lösbar an das Gehäuse anschließbaren Lasche verbindbar ist.

Diese bekannte Kombination findet an einem von Hand geschobenen Rasenmäherverwendung (US-A-3 043 604). Die Tiefeneinstellmittel sind als auf dem Rasen laufende höhenverstellbare Laufräder ausgebildet, die an den unteren Enden der Schenkel gelagert sind. Die Schenkel selbst sind in den schienenartig ausgestalteten Laschen höhenverschiebbar und können durch einen federbelasteten Stift in verschiedenen Positionen festgestellt werden. Die Laschen sind mit den Seitenwänden des Gehäuses verschraubt und stehen über das Deck des Gehäuses nach oben über. Bei einem von Hand geführten Rasenmäher spielt dies an sich keine Rolle, bei einem unter einem Kleinschlepper aufgehängten Mäher beeinträchtigen die nach oben überstehenden Teile jedoch den erforderlichen Freiraum. Hinzu kommt, daß Laufräder in der Herstellung aufwendig und damit teuer sind. Außerdem müssen sie gewartet werden.

Eine andere bekannte Tiefeneinstellvorrichtung (GB-A-1 515 854) ist an einem von einem Schlepper gezogenen Mäher vorgesehen und dient zur Einstellung der Schnitthöhe. Im einzelnen sind an dem Mäherrahmen vier Gleitschuhe vorgesehen, und jeder Gleitschuh ist mit seinem zugehörigen Schenkel drehbar verbunden und als Scheibe ausgebildet, die eine gewölbte auf dem Boden rotierende Außenfläche aufweist. Diese Gleitschuhe arbeiten wie auf dem Boden laufende höhenverstellbare Stützräder, die ebenfalls zur Einstellung der Arbeitshöhe bekannt sind (US-A-4 878 339). Rotierende Gleitschuhe und Stützräder sind in der Herstellung aufwendig und damit teuer. Außerdem müssen sie gewartet werden.

Nicht rotierende und als Kufen ausgebildete Gleitschuhe sind bereits für eine Schneefräse vorgeschlagen worden (US-A-4 441 266). Die Kufen sind an Vertikalschenkeln angebracht und höhenverstellbar, wozu in der Seitenwand eines Gehäuses für die Schneefräse entsprechende Öffnungen vorgesehen sind. Drei verschiedene Vertikalstellungen sind erreichbar, wozu der Vertikalschenkel wenigstens einmal um 180° gedreht werden muß.

Bei bekannten Gewächsschneidern (US-A-2 732 675) sind die hydraulisch antreibbaren Schneidrotore in Ringrahmen angeordnet, an denen halbkugelig und hohl ausgebildete Gleitschuhe fest angebracht sind.

Die der Erfindung zugrunde liegende Aufgabe wird in einem einfach herzustellenden und zu montierenden Tiefeneinstellvorrichtung gesehen, die leicht höhenverstellbar ist und Bodenunebenheiten leicht überwinden kann, ohne daß das Erdreich weggeschoben wird. Diese Aufgabe ist nach der Erfindung dadurch gelöst worden, daß die Lasche als Konsole ausgebildet ist, daß das Gehäuse an seiner Frontseite seitlich mit wenigstens einem ein erstes Paar Öffnungen aufweisenden Wulst und daß die Konsole mit zwei den Wulst übergreifenden, ein zweites Paar Öffnungen aufweisenden und horizontal verlaufenden Schenkeln versehen ist, wobei das Tiefeneinstellmittel einen Gleitschuh aufweist, der an seinem bodenseitigen Ende kugelig oder etwa kugelig ausgebildet ist.

Auf diese Weise kann die Tiefeneinstell Vorrichtung als Sonderausstattung angeboten werden, die Vom Endbenutzer leicht und ohne großen Aufwand nachträglich angebaut werden kann. Der Endbenutzer braucht lediglich die Konsole an das Gehäuse anzuschließen und kann die gewünschte Arbeitsstellung durch einfaches Verstellen des Gleitschuhes in der Konsole wählen. Die Konsole braucht lediglich auf den Wulst aufgesteckt und durch Stifte oder Schrauben gesichert zu werden, die durch die Öffnungen gesteckt werden.

Zum Anschließen der Konsole kann nach einem weiteren Vorschlag der Erfindung das erste Paar Öffnungen vertikal verlaufen und durch entfernbare Stopfen verschließbar sein, wobei des zweite Paar Öffnungen nach dem Entfernen der Stopfen mit dem ersten Paar Öffnungen zur Deckung bringbar ist. Die Stopfen verschließen das erste Paar Öffnungen vorzugsweise von oben, wenn ein Tiefeneinstellmittel nicht gewünscht ist. Die Stopfen sind durch Herausstoßen leicht entfernbar, verhindern ein Verstopfen der Öffnungen und verbessern das Erscheinungsbild des Gehäuses, wenn das Tiefeneinstellmittel nicht montiert ist.

Schließlich kann das Gehäuse als ein wenigstens ein Mähmesser aufnehmendes Mähwerksgehäuse ausgebildet sein und ebenso wie die Konsole und der Gleitschuh mit seinem Schenkel aus Kunststoff hergestellt werden. Eine Kunststoffherstellung ist besonders kostengünstig und wartungsfreundlich.

Zur einfachen und leichten Verstellung des Gleitschuhes sieht die Erfindung außerdem vor, daß in die Konsole eine einenends über die Konsole überstehende Hülse integriert ist, die in ihrem über die Konsole überstehenden Bereich eine horizontal verlaufende Durchgangsöffnung aufweist und den eine Vielzahl übereinanderliegender Öffnungen aufweisenden Schenkel des Gleitschuhes höhenverstellbar aufnimmt.

Neben dem nachträglich zu montierenden Tiefeneinstellmittel kann ferner noch im rückwärtigen seitlichen Bereich des Mähwerksgehäuses mindestens eine Konsole integriert sein, die einen weiteren Gleitschuh mit seinem Schenkel höhenverstellbar aufnimmt.

In der Zeichnung ist ein nachfolgend näher erläutertes Ausführungsbeispiel der Erfindung dargestellt. Es zeigt:
- Fig. 1: einen Kleinschlepper für die Garten- und Landschaftspflege mit einem zwischen seinen Achsen angebauten Rasenmäher,
- Fig. 2: das Mähwerksgehäuse des Rasenmähers in der Draufsicht,
- Fig. 3: Tiefeneinstellmittel für das Mähwerksgehäuse und
- Fig. 4: ein Tiefeneinstellelement in Form eines Gleitschuhes für die Tiefeneinstellmittel.

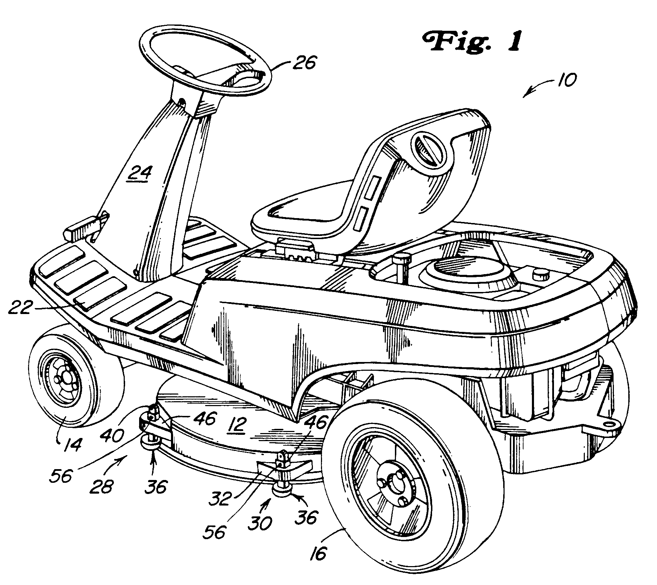

In Fig. 1 der Zeichnung ist ein Kleinschlepper oder Fahrzeug 10 für die Garten- und Landschaftspflege dargestellt, zwischen dessen Achsen bzw. dessen Vorderrädern 14 und Hinterrädern 16 ein Mähwerksgehäuse 12 schwimmend aufgehängt werden kann. Das Fahrzeug 10 ist mit einem Fahrersitz, einem Verbrennungsmotor, mit einer vorderen Fußstellfläche 22, einer nach oben gerichteten Steuersäule 24 und mit einem Lenkrad 26 ausgerüstet.

Das Mähwerksgehäuse 12 nimmt ein in der Zeichnung nicht zu erkennendes Mähmesser und Tiefeneinstellmittel 28 und 30 auf. Diese sind im vorderen und rückwärtigen Bereich des Mähwerksgehäuses vorgesehen, dienen zur Schnitthöheneinstellung und verhindern ein Einschneiden des Messers in das Erdreich. Die im vorderen Bereich des Mähwerksgehäuses 12 vorgesehenen Tiefeneinstellmittel 28 sind als Sonderausstattung vorgesehen. Sie können beim Herstellungsvorgang oder auch später durch den Endbenutzer montiert werden.

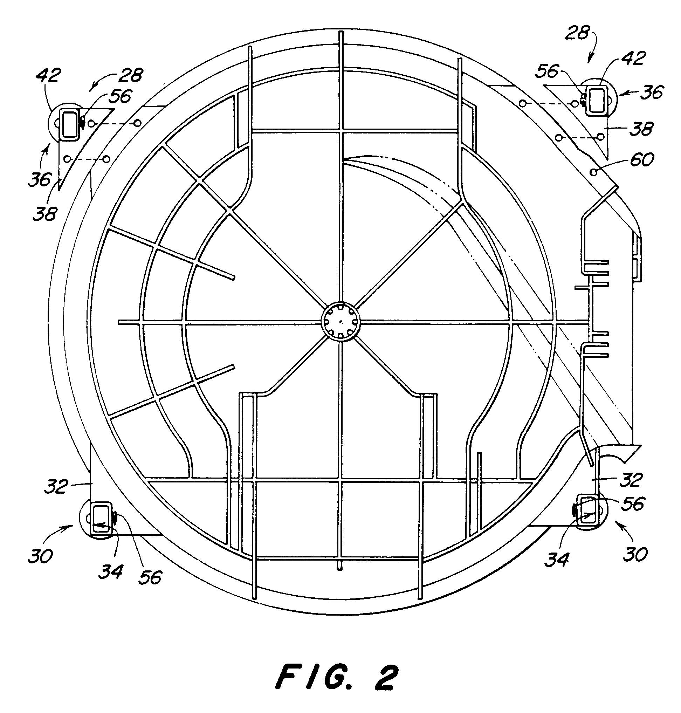

Aus den Fig. 1 und 2 ist zu entnehmen, daß im rückwärtigen Bereich des Mähwerksgehäuses 12 zwei Befestigungslaschen 32 in das Mähwerksgehäuse 12 integriert sind. Sie können zusammen mit dem Mähwerksgehäuse aus Kunststoff gegossen werden und weisen je eine sich vertikal erstreckende Öffnung 34 auf. Die beiden Öffnungen 34 dienen zur verstellbaren Aufnahme je eines Tiefeneinstellelementes 36.

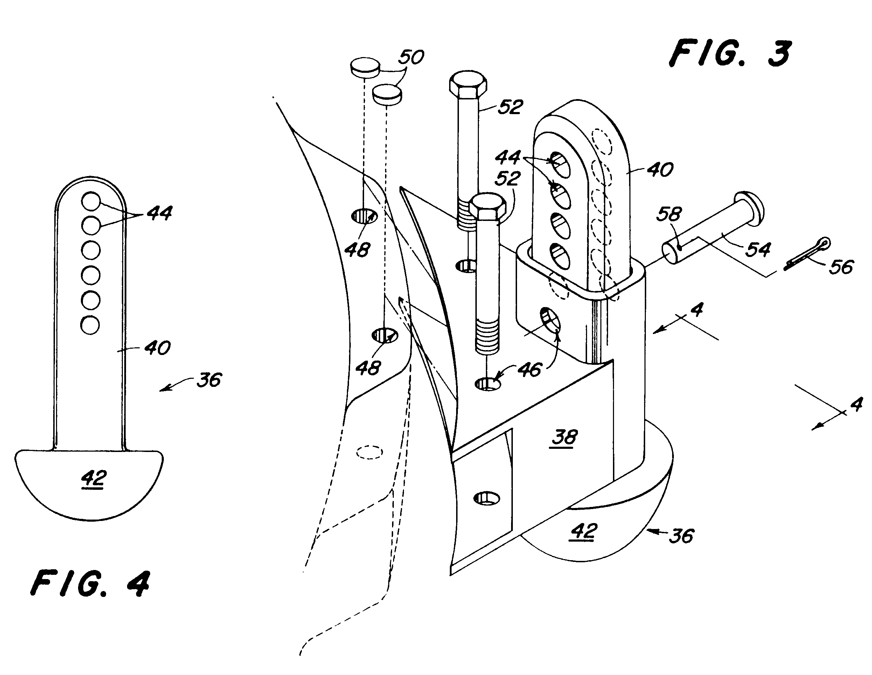

In Fig. 3 ist ein nachträglich anzubringendes Tiefeneinstellmittel in auseinandergezogener Darstellung wiedergegeben. Man erkennt eine anschraubbare Lasche 38 mit einem Tiefeneinstellelement 36, die an der Frontseite des Mähwerksgehäuses 12 auf Wunsch angebracht werden können. Das Tiefeneinstellelement 36 besteht im einzelnen aus einem vertikalen Schenkel 40 und einem unteren Gleitschuh 42, der halbkugelig ausgebildet ist und auf dem Boden oder Rasen gleiten kann. Eine halbkugelige Ausbildung wird bevorzugt, doch sind auch Ausführungen möglich, die auf dem Boden in verschiedenen Richtungen gleiten können. Beispielsweise kann der Gleitschuh nur so gerundet ausgebildet sein, daß er das erforderliche Gleiten oder Rutschen ermöglicht. Der vertikale Schenkel ist mit einer Vielzahl übereinanderliegender Durchgangsöffnungen 44 versehen, die jeweils zu einer Öffnung 46 in der Lasche 32 zur Deckung gebracht werden können, so daß das Tiefeneinstellelement unterschiedliche Vertikalstellungen einnehmen kann. Die Tiefeneinstellelemente im rückwärtigen Bereich des Mähwerksgehäuses 12 sind entsprechend ausgebildet, so daß sie in ihren Befestigungslaschen 32 ebenfalls in unterschiedlichen Höhenstellungen festgesetzt werden können.

In Fig. 2 sind die Stellen gut erkennbar, an denen die als Sonderausstattung gedachten Tiefeneinstellmittel 28 am Mähwerksgehäuse 12 angebracht werden können. Zur Montage der Laschen 38 weisen diese jeweils zwei ebenfalls mit 46 bezeichnete vertikale Öffnungen auf, die mit Öffnungen 48 in einem Wulst am Mähwerksgehäuse 12 zur Deckung gebracht werden können. Der Wulst hat eine bestimmte Höhe und die Laschen 38 werden auf je einen Wulst aufgeschoben. Sie sind hierzu an ihrer dem Mähwerksgehäuse zugelegenen Seite entsprechend ausgespart. Wird das Mähwerksgehäuse ohne die später auch anbaubaren Tiefeneinstellelemente 36 ausgeliefert, so können die Öffnungen 48 durch leicht entfernbare Stopfen 50 verschlossen werden.

Aus Fig. 3 ist weiter zu erkennen, daß die Laschen 38 über Befestigungsmittel 52 mit dem Mähwerksgehäuse 12 verbindbar sind.

Als Befestigungsmittel können dabei Schrauben oder Stifte dienen, die durch die Öffnungen 46 und 48 gesteckt und durch Muttern oder Splinte gesichert werden. Eine Splintsicherung ist bei einem aus Kunststoff gefertigten Mähwerksgehäuse 12 von Vorteil, weil dann der Kunststoff nicht gequetscht wird, was bei unsachgemäßen Anziehen einer Mutter passieren könnte. Alle Tiefeneinstellelemente 36 können über Stifte 54 in ihrer jeweiligen Vertikalstellung festgesetzt werden. Die Stifte werden durch eine der Durchgangsöffnungen 44 und die beiden Öffnungen 46 in den Laschen 32 und 38 gesteckt und über einen Splint 56 gesichert. Hierzu weist jeder Splint 56 eine Durchgangsbohrung 58 auf.

In Fig. 2 ist im vorderen rechten Bereich des Mähwerksgehäuses noch eine Öffnung 60 zu erkennen. Diese dient beispielsweise zum Anschluß eines zu einem Grasfangbehälter führenden Schlauchkanals.

Die Tiefeneinstellelemente 36 müssen nicht immer auf dem Boden gleiten. Das Mähwerksgehäuse 12 ist in der Regel an dem Fahrzeug 10 höhenverstellbar angeschlossen und die Tiefeneinstellelemente 36 können dann so eingestellt werden, daß sie nicht die Schnitthöhe bestimmen, sondern nur verhindern, daß das oder die Messer im Mähwerksgehäuse 12 bei Bodenunebenheiten nicht in den Boden schneiden. Die Tiefeneinstellmittel können ebenfalls aus Kunststoff hergestellt sein. Der Gleitschuh ist so ausgebildet, daß er leicht über Bodenunebenheiten gleiten kann.

## Patentansprüche

1. Kombination aus einem über dem Boden geführten Gehäuse (12) und einem höheneinstellbaren Tiefeneinstellmittel, das einen vertikal gerichteten Schenkel (40) aufweist, der in verschiedenen Vertikalstellungen mit einer lösbar an das Gehäuse (12) anschließbaren Lasche verbindbar ist, dadurch gekennzeichnet, daß die Lasche als Konsole (38) ausgebildet ist, daß das Gehäuse (12) an seiner Frontseite seitlich mit wenigstens einem ein erstes Paar Öffnungen (48) aufweisenden Wulst und daß die Konsole (38) mit zwei den Wulst übergreifenden, ein zweites Paar Öffnungen (46) aufweisenden und horizontal verlaufenden Schenkeln versehen ist, wobei das Tiefeneinstellmittel einen Gleitschuh (42) aufweist, der an seinem bodenseitigen Ende kugelig oder etwa kugelig ausgebildet ist.

2. Kombination nach Anspruch 1, dadurch gekennzeichnet, daß das erste Paar Öffnungen (48) vertikal verläuft und durch entfernbare Stopfen (50) verschließbar ist und das zweite Paar Öffnungen (46) nach dem Entfernen der Stopfen (50) mit dem ersten Paar Öffnungen (48) zur Deckung bringbar ist.

3. Kombination nach Anspruch 1 oder 2, dadurch gekennzeichnet, daß das Gehäuse (12) als ein wenigstens ein Mähmesser aufnehmendes Mähwerksgehäuse ausgebildet ist und ebenso wie die Konsole, und der Gleitschuh (42) mit seinem Schenkel (40) aus Kunststoff hergestellt ist.

4. Kombination nach Anspruch 1, dadurch gekennzeichnet, daß in die Konsole (38) eine einenends über die Konsole überstehende Hülse integriert ist, die in ihrem über die Konsole überstehenden Bereich eine horizontal verlaufende Durchgangsöffnung (46) aufweist und den eine Vielzahl übereinanderliegender Öffnungen (44) aufweisenden Schenkel (40) des Gleitschuhes (42) höhenverstellbar aufnimmt.

5. Kombination nach einem oder mehreren der vorherigen Ansprüche, dadurch gekennzeichnet, daß im rückwärtigen seitlichen Bereich des Mähwerksgehäuses (12) mindestens eine Konsole (32) integriert ist, die einen weiteren Gleitschuh (42) mit seinem Schenkel (40) höhenverstellbar aufnimmt.

## Claims

1. Combined arrangement comprising a housing (12) guided over the ground and a vertically adjustable depth gauge means, which has an upright leg portion (40), which may be connected in various vertical positions to a strap, which may be detachably connected to the housing (12), characterised in that said strap is constructed in the form of a bracket (38); that to the side of its front end, said housing (12) is provided with at least one reinforced portion with a first pair of openings (48); and that said bracket (38) is provided with two horizontally running leg portions, which cover the reinforced portion and have a second pair of openings (46), wherein the depth gauge means has a skid member (42) which is spherical or approximately spherical at its end on the ground side.

2. Combined arrangement according to Claim 1, characterised in that the first pair of openings (48) runs vertically and may be closed off by means of removable plugs (50), and after said plugs (50) have been removed, the second pair of openings (46) may be brought into alignment with the first pair of openings (48).

3. Combined arrangement according to Claim 1 or 2, characterised in that the housing (12) is constructed in the form of a mower housing accommodating at least one mowing blade and, like the bracket and the skid member (42), may be manufactured with its leg portion (40) from plastic.

4. Combined arrangement according to Claim 1, characterised in that integrated into the bracket (38) is a sleeve, which projects over the bracket at one end, has a horizontally extending passage (46) in its region projecting over the bracket and adjustably in height accommodates the leg portion (40) of the skid member (42) having a plurality of superposed openings (44).

5. Combined arrangement according to one or several of the preceding claims, characterised in that in the rear side region of the mower housing (12), at least one bracket (32) is integrated, which adjustably in height accommodates a further skid member (42) with its leg portion (40).

## Revendications

1. Assemblage constitué d'un capot (12) qui est déplacé au-dessus du sol et d'un moyen de réglage en hauteur ajustable verticalement, comportant une branche (40) orientée verticalement, qui peut être reliée dans différentes positions verticales à une éclisse pouvant être raccordée de façon amovible au capot (12), caractérisé en ce que l'éclisse est réalisée sous la forme d'une console (38), en ce que le capot (12) est équipé latéralement sur sa face frontale d'au moins un bourrelet comportant une première paire d'ouvertures (48), et que la console (38) est équipée de deux branches horizontales recouvrant le bourrelet et comportant une deuxième paire d' ouvertures (46), le moyen de réglage en hauteur comportant un patin (42) dont l'extrémité côté sol est de forme sphérique ou à peu près sphérique.

2. Assemblage selon la revendication 1, caractérisé en ce que la première paire d'ouvertures (48) s'étend verticalement et est obturable par des bouchons (50) pouvant être retirés, et en ce qu'après le retrait des bouchons (50) la deuxième paire d'ouvertures (46) peut être mise en coïncidence avec la première paire d'ouvertures (48).

3. Assemblage selon l'une des revendications 1 ou 2, caractérisé en ce que le capot (12) est conçu sous la forme d'un capot de tondeuse pouvant recevoir au moins une lame de coupe et en ce qu'il est fabriqué en matière plastique, de même que la console et le patin (42) avec sa branche (40).

4. Assemblage selon la revendication 1, caractérisé en ce qu'un manchon dépassant de l'une des extrémités de la console est intégré dans la console (38), qui comporte dans sa partie dépassant de la console une ouverture de passage horizontale (46), et dans lequel est logée de façon ajustable verticalement la branche (40) du patin (42) comportant une pluralité d'ouvertures (44) superposées.

5. Assemblage selon l'une quelconque ou plusieurs des revendications précédentes, caractérisé en ce qu'au moins une console (32) est intégrée dans la partie latérale arrière du capot (12) de la tondeuse, dans laquelle un autre patin (42) avec sa branche (40) est logé de façon ajustable verticalement.
